# EUROPÄISCHE PATENTSCHRIFT

(11) **EP 0 727 370 B1**
(45) Veröffentlichungstag und Bekanntmachung des Hinweises auf die Patenterteilung: **19.05.1999**
(21) Anmeldenummer: 96810085.9
(22) Anmeldetag: 13.02.1996
(51) Int. Cl.: B65G 47/244

(54) **Förderanlage**
Conveyor system
Installation de transport

(30) Priorität: 17.02.1995 CH 467/95
(43) Veröffentlichungstag der Anmeldung: 21.08.1996
(73) Patentinhaber: GRAPHA-HOLDING AG, 6052 Hergiswil (CH)
(72) Erfinder: Maier, Willi, CH-8302 Kloten (CH)

(56) Entgegenhaltungen:
- DE-A- 1 806 888
- GB-A- 1 156 756
- GB-A- 2 145 387
- US-A- 2 841 269
- US-A- 4 328 889
- US-A- 4 598 815

## Beschreibung

Die Erfindung betrifft eine Förderanlage mit einem Förderer zum Beladen einer aus einer Mehrzahl miteinander verbundener Wagen bestehenden Sortiervorrichtung mit Gegenständen, wobei der Förderer eine der Sortiervorrichtung zugewandte parallele Uebergabekante eines Schrägbandes und Mittel zum Ausrichten der Gegenstände aufweist.

Eine Förderanlage dieser Art ist im Stand der Technik durch die US - A - 4'682'682 bekannt geworden. Diese weist ein Schrägband auf, das zwischen den Teilbändern versenkbare Finger in L-förmiger Anordnung besitzt. Zum Ausrichten eines Pakets oder eines ähnlichen Gegenstandes werden die Finger angehoben, bis sie die Oberseite des Schrägbandes überragen. Ein auf das Schrägband gebrachtes Paket läuft auf diese Finger auf und wird an diesen ausgerichtet und gestoppt. Ist das Paket ausgerichtet, so werden die Finger mit einer unter dem Schrägband angeordneten Antriebsvorrichtung gesenkt. Das ausgerichtete Paket wird durch den Schrägförderer in Förderrichtung in ausgerichteter Anordnung weitergenommen und dem vorgesehenen Wagen der Sortiervorrichtung übergeben. Das Ausrichten vergleichsweise grosser Pakete hat den Vorteil, dass die Teilung der Sortiervorrichtung möglichst kurz gehalten werden kann und entsprechend eine hohe Leistung erreichbar ist.

Der Erfindung liegt die Aufgabe zugrunde, eine Förderanlage der genannten Art zu schaffen, die automatisch die Gegenstände orientiert und der Sortieranlage zuführt. Die Anlage soll sich insbesondere zum Fördern von Paketen, insbesondere Postpaketen eignen.

Die Aufgabe ist bei einer erfindungsgemässen Förderanlage dadurch gelöst, dass dem Schrägband in Förderrichtung betrachtet hintereinander ein Förderband und ein Taktband vorgeschaltet sind und in einer zwischen Förderband und Taktband gebildeten Lücke eine die Gegenstände von unten erfassende und nach der Uebergabekante ausrichtende Schwenkvorrichtung angeordnet ist. Bei der erfindungsgemässen Förderanlage werden die Gegenstände während der Förderbewegung erfasst und gedreht. Da die Gegenstände somit nicht bis zum Stillstand gebremst werden und nachher wieder beschleunigt werden müssen, kann die Verweildauer der Gegenstände auf dem Förderer reduziert und damit die Leistung erhöht werden. Die Ausrichtung der Gegenstände ist dann besonders exakt, wenn vor der Schwenkvorrichtung die Länge der einzelnen Gegenstände gemessen wird. Dies kann beispielsweise mittels Lichtschranken erfolgen.

Die Anlage ist dann besonders herstellbar und funktionssicher, wenn die Schwenkvorrichtung gemäss einer Weiterbildung der Erfindung wenigstens eine angetriebene Richtrolle aufweist. Diese ist vorzugsweise versenkbar angeordnet, so dass die Gegenstände durch diese Rolle wahlweise von unten erfasst und verschwenkt werden können. Durch die Richtrolle kann ein zu verschwenkender Gegenstand am vorderen Ende angehoben werden.

Ein solcher angehobener Gegenstand liegt dann im wesentlichen noch mit der hinteren Kante auf der Oberseite des Förderers auf und kann mit entsprechend sehr kleiner Reibung sehr schnell verschwenkt werden.

Nach einer vorteilhaften Weiterbildung der Erfindung ist die Schwenkvorrichtung in einer querverlaufenden Lücke zwischen zwei Bändern angeordnet. Diese Lücke kann vergleichsweise schmal gehalten werden, so dass auch sehr kleine Gegenstände an dieser Lücke nicht anstehen. Ist anschliesend an die Schwenkvorrichtung in Förderrichtung gesehen ein Taktband angeordnet, so können die ausgerichteten Gegenstände durch dieses Band getaktet übernommen und abgegeben werden. Dies ermöglicht eine sehr präzise Abgabe an die Wagen der Sortiervorrichtung.

Weitere vorteilhafte Merkmale ergeben sich aus den abhängigen Patentansprüchen, der nachfolgenden Beschreibung sowie der Zeichnung. Nachfolgend wird ein Ausführungsbeispiel anhand der Zeichnung näher erläutert. Es zeigen:
- Fig. 1: schematisch eine erfindungsgemässe Förderanlage,
- Fig. 2: ein Ausschnitt der Anlage gemäss Figur 1 zur Illustration der Ausrichtung der Gegenstände,
- Fig. 3: eine Seitenansicht eines Teils des Förderers,
- Fig. 4: ebenfalls schematisch eine Draufsicht auf einen Teil des Förderers, und
- Fig. 5: schematisch eine Ansicht eines Teils der Schwenkvorrichtung.

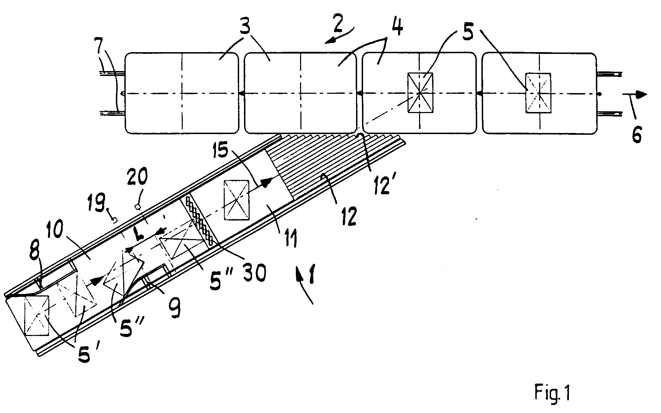

Die Figur 1 zeigt schematisch einen Abschnitt einer endlosen Sortiervorrichtung 2, die auf Schienen 7 geführt eine Mehrzahl miteinander verbundener Wagen 3 besitzt. Jeder Wagen 3 ist mit einer Tragplatte 4 versehen, die an einer hier nicht gezeigten Entladestelle wenigstens nach einer Seite kippbar ist. Die zu sortierenden Gegenstände 5 sind beispielsweise Pakete, welche mit einem Förderer 1 auf die Tragplatten 3 gebracht werden. Sortiervorrichtungen sind dem Fachmann gut bekannt und brauchen hier nicht näher erläutert zu werden. In Figur 1 ist die Laufrichtung der Fördervorrichtung 2 durch den Pfeil 6 angegeben.

Der Förderer 1 besitzt in linearer Anordnung hintereinander ein Förderband 10, ein Taktband 11 sowie ein Schrägband 12 mit einer parallel zur Sortiervorrichtung 2 verlaufenden Uebergabekante 12'. Das Schrägband 12 weist in an sich bekannter Weise eine Mehrzahl paralleler Teilbänder 13 auf.

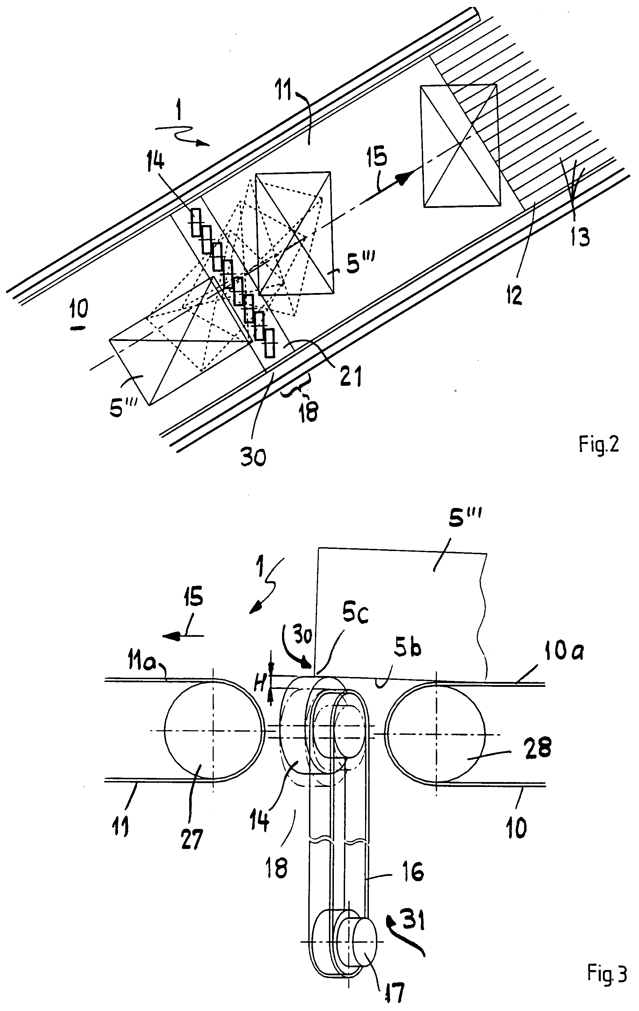

Zwischen dem Förderband 10 und dem Taktband 11 besteht eine Lücke 18 (Figur 3), in welcher eine Schwenkvorrichtung 30 angeordnet ist. Die Lücke 18 ist durch einen entsprechenden Abstand benachbarter Rollen 27 und 28 gebildet. Die Lücke 18 erstreckt sich vorzugsweise über die gesamte Breite des Förderers 1 und besitzt an ihrer engsten Stelle eine Breite von etwa 3 bis 6 cm, vorzugsweise etwa 5 cm.

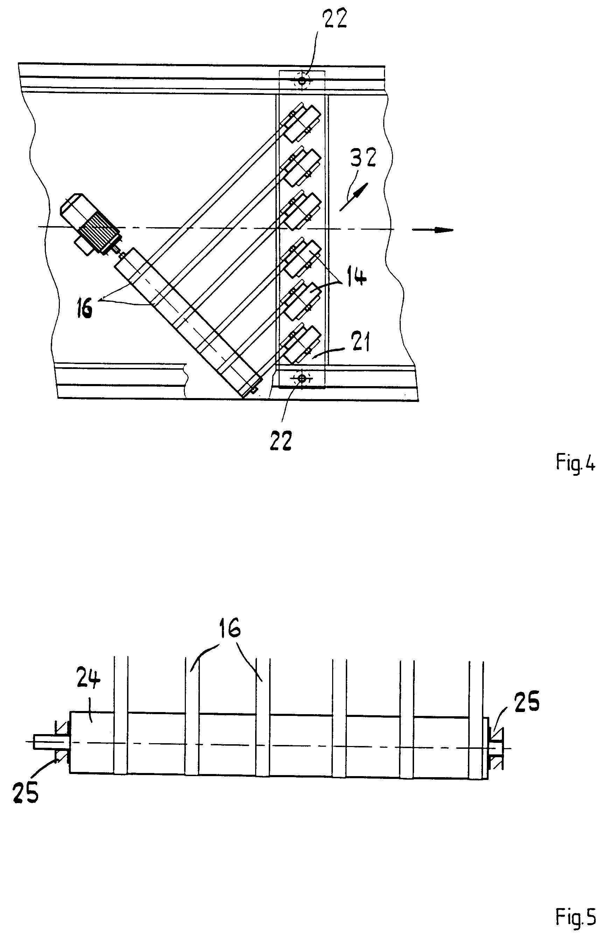

Die Schwenkvorrichtung 30 weist eine Mehrzahl auf einem Träger 21 gelagerter Richtrollen 14 auf. Diese sind beispielsweise an Lagerplatten 13 gelagert und parallel zueinander sowie schräg zur Förderrichtung 15 angeordnet. Unterhalb des Trägers 21 befindet sich ein Antrieb 31, mit dem die Richtrollen 14 gemeinsam in gleicher Richtung drehbar sind. Der Antrieb 31 besteht aus Riemen 16, die um eine Antriebswalze 14 gelegt sind, die an einem Gestell 25 gelagert ist und mit einem hier nicht gezeigten Motor verbunden ist. Der Antrieb 31 ist so ausgebildet, dass die Richtrollen 14 mit dem Träger 21 beispielsweise mit pneumatischen Zylindern 22 höhenverstellbar sind. In der Figur 3 ist die angehobene Position mit ausgezogenen Linien und die versenkte untere Position gestrichelt dargestellt. Der optimale Hub H beträgt beispielsweise 1 cm. Im angehobenen Zustand überragen die Richtrollen 14 den oberen Trum 11a des Taktbandes 11 sowie den oberen Trum 10a des Förderbandes 10 um wenige Millimeter. In der unteren gestrichelt gezeigten Position sind die Richtrollen 14 in der Lücke 18 versenkt. Die Drehrichtung der Richtrollen 14 ist in Figur 4 durch den Pfeil 32 angedeutet. Die Richtrollen 14 weisen eine Umfangsfläche 14a auf, die vorzugsweise einen hohen Reibungskoeffizient aufweist. Die Rollen 14 können beispielsweise Gummirollen sein. Das Anheben bzw. Versenken der Richtrollen 14 erfolgt vorzugsweise mittels einer hier nicht gezeigten Steuervorrichtung, welche die pneumatischen Zylinder 22 entsprechend aktiviert.

Das Förderband 10 ist in Laufrichtung gesehen vor der Schwenkvorrichtung 30 angeordnet und kann ein übliches Band sein. Seitlich und hintereinander sind auf dem Band 10 Richtwangen 8 und 9 angeordnet.

Nachfolgend wird die Arbeitsweise der erfindungsgemässen Förderanlage näher erläutert. Die zu sortierenden Gegenstände 5 werden von Hand oder maschinell vorzugsweise grob ausgerichtet vor der Richtwange 8 auf das Förderband 10 gelegt. Die abgelegten Gegenstände 5' werden bereits durch die Richtwange 8 weiter ausgerichtet, wie die Figur 1 andeutet. Lange Pakete 5' werden durch die Richtwange 8 so plaziert, dass sie durch die nachfolgende, auf der anderen Seite angeordnete Richtwange 9 so ausgerichtet werden, dass eine Schmalseite 5a in Förderrichtung 15 gesehen vorne angeordnet ist. Die Figur 1 zeigt diese Längsausrichtung an der Richtwange 9 anhand der Pakete 5''. Auf der Höhe der Richtwange 9 sind im Abstand zueinander Lichtschranken 19 und 20 angeordnet, mit denen die Länge eines Paketes 5'' genau bestimmbar ist. Ist durch die Lichtschranken 19 und 20 ein besonders langes Paket 5'' bestimmt, das nachfolgend ausgerichtet werden soll, so werden die Richtrollen 14 in die in Figur 3 mit ausgezogenen Linien dargestellte angehobene Position gebracht.

Ein die Lücke 18 erreichendes Paket 5''' wird etwa mittig der Lücke 18 an der vorderen Kante 5c von den angetriebenen Richtrollen 14 erfasst und leicht angehoben, wie in Figur 3 angedeutet. Einige oder alle Richtrollen 14 sind nun mit ihren Aussenseiten 14a in Eingriff mit der Unterseite 5b des Pakets 5'''. Da die Richtrollen 14 zur Laufrichtung 15 des Förderers ausgerichtet sind, erfährt das Paket 5'' eine Kraftkomponente quer zur genannten Laufrichtung und wird entsprechend die Schwenkvorrichtung 30 in die gewünschte Schräglage gedreht. Da das Paket 5''' lediglich mit seiner hinteren Kante auf dem Förderband 10 aufliegt, ist die erforderliche Kraft zum Drehen des Paketes vergleichseeise klein. Die Drehung erfolgt bei stetiger Förderung des Paketes 5'''. Die Richtrollen 14 werden spätestens dann versenkt, wenn die Mitte des Paketes 5''' die Richtrollen 18 erreicht hat. Dadurch wird ein Zurückschwenken des Paketes vermieden. Der Schwenkwinkel kann durch die Länge des Einsgriffs der Richtrollen 14 am Paket 5''' sehr genau gesteuert werden. Vorzugsweise wird dazu die mit den Lichtschranken 19 und 20 bestimmte Länge L benutzt. Werden gleich lange Pakete 5 gefördert, so erübrigt sich selbstverständlich eine solche Längenmessung. Dies kann auch dann der Fall sein, wenn nicht sehr hohe Anforderungen an die Genauigkeit der Ausrichtung estellt werden.

Die Figur 2 zeigt schematisch die Schwenkbewegung des Pakets 5'''. Sobald das Paket 5''' ausgerichtet ist, wird es vom Taktband 11 erfasst und dem Schrägband 12 übergeben. Dieses übergibt das Paket 5 einem vorbestimmten Wagen 3. Dankbar ist auch eine Ausführung, bei der an einen Wagen 3 mehr als ein Gegenstand 5 übergeben wird. Wie die Figur 1 zeigt, sind die auf die Tragplatte 4 geförderten Gegenstände 5 bezüglich der Laufrichtung 6 der Sortiervorrichtung 2 ausgerichtet, so dass die Pakete 5 im wesentlichen gleich gross sein können wie die Tragplatten 3, ohne dass die Pakete 5 diese überragen.

## Patentansprüche

1. Förderanlage mit einem Förderer (1) zum Beladen einer aus einer Mehrzahl miteinander verbundener Wagen (3) bestehenden Sortiervorrichtung (2) mit Gegenständen (5), wobei der Förderer (1) eine der Sortiervorrichtung (2) zugewandte parallele Uebergabekante (12') eines Schrägbandes (12) und Mittel zum Ausrichten der Gegenstände (5) aufweist, dadurch gekennzeichnet, dass dem Schrägband (12) in Förderrichtung betrachtet hintereinander ein Förderband (10) und ein Taktband (11) vorgeschaltet sind und in einer zwischen Förderband (10) und Taktband (12) gebildeten Lücke (18) eine die Gegenstände (5) von unten erfassende und nach der Uebergabekante (12') ausrichtende Schwenkvorrichtung (30) angeordnet ist.

2. Anlage nach Anspruch 1, dadurch gekennzeichnet, dass die Schwenkvorrichtung (30) in eine oben vorstehende Lage anhebbar und versenkbar ist.

3. Anlage nach Anspruch 2, dadurch gekennzeichnet, dass die Schwenkvorrichtung (30) mehrere nebeneinander angeordnete, schräg zur Förderrichtung (15) der Gegenstände (5) angetriebene Richtrollen (14) aufweist.

4. Anlage nach einem der Ansprüche 1 bis 3, zum gesteuerten Erfassen der Gegenstände (5) im Bereich der vorderen Hälfte durch die Schwenkvorrichtung (30), dadurch gekennzeichnet, dass vor der Schwenkvorrichtung (30) Mittel (19, 20) zur Längenmessung der Gegenstände (5) angeordnet sind.

5. Anlage nach einem der Ansprüche 1 bis 4, dadurch gekennzeichnet, dass vor der Schwenkvorrichtung (30) wenigstens eine, vorzugsweise zwei Richtwangen (8, 9) angeordnet sind, an denen die Gegenstände in Förderrichtung (15) ausrichtbar sind.

6. Anlage nach einem der Ansprüche 1 bis 5, dadurch gekennzeichnet, dass in Förderrichtung (15) gesehen, links und rechts wenigstens je eine Richtwange (8, 9) oberseitig eines Förderbandes (10) angeordnet sind.

## Claims

1. Conveyor system, comprising a conveyor (1) for loading articles (5) on to a sorting device (2) consisting of a plurality of trucks (3) connected together, the conveyor (1) having a parallel transfer edge (12') of an inclined belt (12) directed towards the sorting device (2) and means for aligning the articles (5), characterised in that a conveyor belt (10) and an indexing belt (11) are arranged one behind the other upstream of the inclined belt (12) as viewed in the conveying direction and a swivel mechanism (30) gripping the articles (5) from below and aligning them along the transfer edge (12') is arranged in a gap (18) formed between the conveyor belt (10) and the indexing belt (11).

2. System according to claim 1, characterised in that the swivel mechanism (30) can be raised into and lowered out of a position projecting towards the top.

3. System according to claim 2, characterised in that the swivel mechanism (30) has a plurality of straightening rollers (14) arranged alongside one another and driven at an incline relative to the conveying direction (15) of the articles (5).

4. System according to one of claims 1 to 3, for the controlled gripping of the articles (5) in the region of the front half thereof by the swivel mechanism (30), characterised in that means (19, 20) for measuring the lengths of the articles (5) are arranged upstream of the swivel mechanism (30).

5. System according to one of claims 1 to 4, characterised in that at least one, preferably two, straightening cheeks (8, 9) along which the articles can be aligned in the conveying direction (15) are arranged upstream of the swivel mechanism (30).

6. System according to one of claims 1 to 5, characterised in that at least one respective straightening cheek (8, 9) is arranged on top of a conveyor belt (10) on the left and on the right as viewed in the conveying direction (15).

## Revendications

1. Installation de transport comportant un convoyeur (1) pour le chargement avec des objets (5) d'une station de tri (2) se composant d'une pluralité de chariots (3) reliés entre eux, le convoyeur (1) comportant un bord de transbordement parallèle (12') d'une bande biaise (12) orienté vers la station de tri (2) et des moyens d'orientation des objets (5), caractérisée en ce qu'une bande transporteuse (10) et une bande synchronisée (11) sont placées à la suite l'une de l'autre en amont de la bande biaise (12) en considérant la direction de transport et en ce qu'il est disposé, dans un interstice (18) formé entre la bande transporteuse (10) et la bande synchronisée (11), un dispositif de pivotement (30) saisissant les objets (5) par en dessous et les orientant vers le bord de transbordement (12').

2. Installation selon la revendication 1, caractérisée en ce que le dispositif de pivotement (30) est relevable en faisant saillie vers le haut et escamotable vers le bas.

3. Installation selon la revendication 2, caractérisée en ce que le dispositif de pivotement (30) présente plusieurs rouleaux d'orientation (14) placés les uns à côté des autres et entraînés en biais par rapport à la direction de transport (15) des objets (5).

4. Installation selon l'une des revendications 1 à 3 pour la saisie guidée des objets (5) dans la zone de la moitié avant par le dispositif de pivotement (30), caractérisée en ce que des moyens (19, 20) pour la mesure en longueur des objets (5) sont disposés avant le dispositif de pivotement (30).

5. Installation selon l'une des revendications 1 à 4, caractérisée en ce qu'au moins une, et de préférence, deux joue(s) d'orientation (8,9) (est) sont disposée(s) avant le dispositif de pivotement (30), contre lesquelles les objets, dans la direction de transport (15), peuvent être orientés.

6. Installation selon l'une des revendications 1 à 5, caractérisée en ce que, considéré dans la direction de transport (15), une joue d'orientation (8,9) au moins est disposée à gauche et à droite dans la partie supérieure d'une bande transporteuse (10).
